**Europäisches Patentamt**

(19) **European Patent Office**

**Office européen des brevets**

(11) Veröffentlichungsnummer: **0 058 234
B1**

(12) # EUROPÄISCHE PATENTSCHRIFT

(45) Veröffentlichungstag der Patentschrift:
06.03.85

(51) Int. Cl.⁴: **H 02 K 1/18**

(21) Anmeldenummer: **81108732.9**

(22) Anmeldetag: **22.10.81**

(54) **Ständer für eine dauermagneterregte elektrische Maschine.**

(30) Priorität: **16.02.81 DE 3105602**

(43) Veröffentlichungstag der Anmeldung:
**25.08.82 Patentblatt 82/34**

(45) Bekanntmachung des Hinweises auf die Patenterteilung:
**06.03.85 Patentblatt 85/10**

(84) Benannte Vertragsstaaten:
**DE FR GB IT**

(56) Entgegenhaltungen:
**AT - B - 325 707
DE - A - 2 005 194
DE - A - 2 342 499
DE - B - 1 038 171
FR - A - 1 400 581
FR - A - 1 588 569
US - A - 3 091 713**

(73) Patentinhaber: **Siemens Aktiengesellschaft, Berlin und München Wittelsbacherplatz 2, D-8000 München 2 (DE)**

(72) Erfinder: **Voss, Erich, Dr., Hedwig-Fichtel-Strasse 18, D-8740 Bad Neustadt/Saale (DE)**
Erfinder: **Gräfenschnell, Horst, Schulstrasse 3, D-8740 Bad Neustadt/Saale (DE)**

**Beschreibung**

Die Erfindung betrifft einen Ständer für eine dauermagneterregte elektrische Maschine, in dessen Bohrung schalenförmige Dauermagnete eingesetzt und in Umfangsrichtung gesichert sind, bei dem ferner zwischen den Dauermagneten Federelemente eingefügt sind, welche an ihren über ein Rückenteil miteinander verbundenen Federarmen sich axial erstreckende Einkerbungen aufweisen, in welche die Dauermagnete mit einer entsprechend ausgebildeten Spitze eingreifen.

Ein solcher Ständer ist durch die DE-A1-2 342 499 bekannt. Bei diesem Ständer sind die Federelemente lediglich zwischen die Dauermagnete geschoben und verspannen diese seitlich. Um eine Verschiebung in Umfangsrichtung zu verhindern, sind am Ständergehäuse radial vorstehende Zapfen ausgebildet, die in entsprechende an den Dauermagneten vorgesehene Ausnehmungen eingreifen.

Es hat sich gezeigt, daß bei hartem mechanischen Stößen so hohe radial wirkende Kräfte auftreten können, daß die seitliche Spannkraft nicht mehr ausreicht, um die Dauermagnete in Anlage am Ständergehäuse zu halten.

Durch die FR-A-1 400 581 ist eine dauermagneterregte elektrische Maschine bekannt, bei der der Ständer scheibenförmig ausgebildet und die Dauermagnete axial vorstehend an dem Ständer angeordnet sind. Zwischen den Dauermagneten sind Federelemente eingesetzt, die mit ihren Federarmen an den radial verlaufenden Seiten der Dauermagnete anliegen. Die von den Federarmen auf die Dauermagnete wirkende Kraft enthält eine radial nach außen gerichtete Kraftkomponente, durch die die Dauermagnete gegen einen am Ständer vorgesehenen Anschlag gedrückt und auf diese Weise am Ständer gehalten werden. Die Federelemente selbst sind mit ihrem die Federarme verbindenden Rückenteil durch Öffnungen der Wand des Ständergehäuses hindurchgesteckt und mittels am Rückenteil vorgesehener seitlich abstehender Lappen an der Außenseite des Ständergehäuses verhakt. Auch bei einer solchen Befestigungsart können die Dauermagnete bei hohen radial wirkenden Kräften aus ihrer Lage gerissen werden. Ein weiterer Nachteil ist darin zu sehen, daß die Wand des Ständergehäuses durchbrochen ist und daher diese bekannte Befestigungsart nicht bei Maschinen angewendet werden kann, die eine geschlossene Bauart des Ständergehäuses erfordern.

Der Erfindung liegt die Aufgabe zugrunde, einen Ständer für eine dauermagneterregte elektrische Maschine so auszubilden, daß auch bei harten Stoßbelastungen eine sichere Befestigung der Dauermagnetschalen gewährleistet ist, wobei die Federelemente zur Montagevereinfachung ohne gesondert montierbare Befestigungsteile am Ständer sicher gehalten werden sollen.

Die Lösung der gestellten Aufgabe gelingt nach der Erfindung dadurch, daß die Federelemente an ihrem Rückenteil seitlich abstehende Lappen aufweisen, mit denen die Federelemente in am Umfang der Ständerbohrung vorgesehene, Hinterschneidungen aufweisende Ausnehmungen, welche sich mindestens bis zu einer Stirnseite des Ständers hin erstrecken und an dieser Stirnseite offen sind, eingeschoben sind.

Durch die in die Ausnehmungen eingreifenden Ansätze der Federelemente werden diese sowohl in radialer wie auch in Umfangsrichtung sicher am Ständer gehalten. Durch den Formschluß zwischen den Federarmen und den Dauermagnetschalen werden letztere ebenso ausreichend gegen in radialer oder Umfangsrichtung wirkende Kräfte gesichert. Die Federelemente können bei der Montage von der Stirnseite her in die Ausnehmungen eingeschoben werden. Dies ist insbesondere für eine automatische Fertigung von Vorteil.

Eine für das axiale Einbringen der Federelemente besonders vorteilhafte konstruktive Ausführungsform ergibt sich dadurch, daß die Ausnehmungen als schwalbenschwanz- oder T-förmige Schlitze ausgebildet und die Lappen aus dem Rückenteil ausgestanzt und aufgebogen sind.

Anhand eines in der Zeichnung dargestellten Ausführungsbeispiels wird der Anmeldungsgegenstand nachfolgend näher beschrieben. Es zeigt

Fig. 1 einen Ständer einer dauermagneterregten elektrischen Maschine im Querschnitt,

Fig. 2 ein Federelement im Querschnitt,

Fig. 3 eine Seitenansicht eines Federelementes und

Fig. 4 die Anordnung eines Federelementes im Detail.

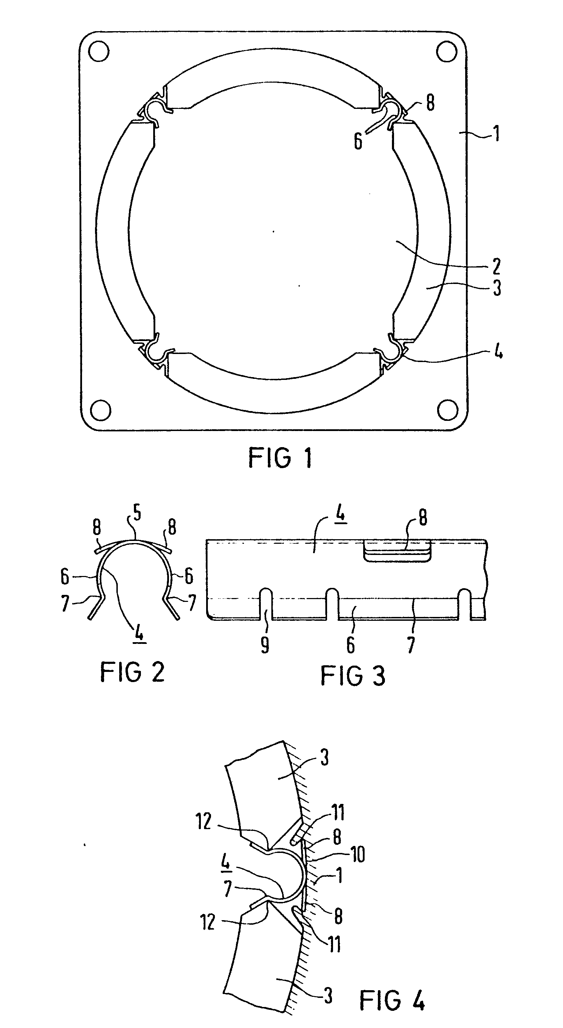

In Fig. 1 ist mit 1 der Ständer einer dauermagneterregten elektrischen Maschine bezeichnet. Dieser Ständer 1 weist eine Ständerbohrung auf, in die vier Dauermagnetschalen 3 eingesetzt sind. Zwischen den Dauermagnetschalen 3 sind Federelemente 4 eingefügt.

Diese Federelemente weisen jeweils zwei über ein Rückenteil 5 miteinander verbundene Federarme 6 auf. An jedem Federarm ist eine sich in axialer Richtung erstreckende Einkerbung 7 ausgebildet. Am Rückenteil 5 sind Ansätze 8 vorgesehen, die durch am Rückenteil 5 ausgestanzte und aufgebogene Lappen gebildet werden. Die Federarme 6 selbst weisen Einschnitte 9 auf, durch die die Elastizität der Federarme 6 beeinflußt werden kann.

Wie die Detaildarstellung nach Fig. 4 zeigt, sind am Umfang der Ständerbohrung Ausnehmungen 10 vorgesehen, die Hinterschneidungen 11 aufweisen. Mit ihren Ansätzen 8 greifen die Federelemente 4 hinter diese Hinterschneidungen und werden somit in den Ausnehmungen sowohl in radialer als auch in Umfangsrichtung gesichert. Die Dauermagnete 3 sind an ihren Seitenkanten mit einer Spitze 12 versehen, mit der sie in die Einkerbung 7 der Federelemente 4 eingreifen. Hierdurch ergibt sich ein Formschluß zwischen den Dauermagneten 3 und den Federarmen 6 der Federelemente 4, so daß die Federelemente 4 die Dauermagnete 3 sowohl in radialer als auch in Umfangsrichtung halten können. Die Federelemente 4 können von der Stirnseite her in die Ausnehmungen 10 eingeschoben werden.

## Patentansprüche

1. Ständer für eine dauermagneterregte elektrische Maschine, in dessen Bohrung schalenförmige Dauermagnete (3) eingesetzt und in Umfangsrichtung gesichert sind, bei dem ferner zwischen den Dauermagneten (3) Federelemente (4) eingefügt sind, welche an ihren über ein Rückenteil (5) miteinander verbundenen Federarmen (6) sich axial erstreckende Einkerbungen (7) aufweisen, in welche die Dauermagnete (3) mit einer entsprechend ausgebildeten Spitze (12) eingreifen, dadurch gekennzeichnet, daß die Federelemente (4) an ihrem Rückenteil (5) seitlich abstehende Lappen (8) aufweisen, mit denen die Federelemente in am Umfang der Ständerbohrung vorgesehene, Hinterschneidungen (11, 13) aufweisende Ausnehmungen (10), welche sich mindestens bis zu einer Stirnseite des Ständers (1) erstrecken und an dieser Stirnseite offen sind, eingeschoben sind.

2. Ständer nach Anspruch 1, dadurch gekennzeichnet, daß die Ausnehmungen (10) als schwalbenschwanz- oder T-förmige Schlitze ausgebildet und die Lappen (8) aus dem Rückenteil ausgestanzt und aufgebogen sind.

## Claims

1. A stator for a permanent magnet energised electrical machine in whose bore dish-shaped permanent magnets (3) are inserted and secured in the peripheral direction, wherein moreover between the permanent magnets (3) there are inserted spring elements (4) which have spring arms (6) connected to one another via a rear component (5), and which possess indentations (7) that extend in the axial direction to receive and engage with an apropriately shaped tip (12) of the permanent magnets (3), characterised in that the spring elements (4) are provided with lugs (8) which project laterally from their rear component (5) and by means of which the spring elements are inserted into recesses (10) provided at the periphery of the stator bore and possessing undercuts (11, 13), that extend at least to one end side of the stator (1) and are open at this end side.

2. A stator as claimed in Claim 1, characterised in that the recesses (10) are in the form of dovetailed or T-shaped slots, and the lugs (8) are punched out of the rear component and bent upwards.

## Revendications

1. Stator pour une machine électrique excitée par des aimants permanents, dans l'alésage duquel sont montés et accrochés dans le sens périphérique, des aimants permanents (3) en forme de cuvettes, dans lequel sont, en outre, insérés entre les aimants permanents (3) des éléments de ressort (4) qui présentent sur les bras de ressort (6) reliés entre eux par l'intermédiaire d'une partie dorsale (5), des encoches (7) s'étendant axialement et dans lesquelles les aimants permanents pénètrent par une pointe (12) réalisée de façon correspondante, caractérisé par le fait que les éléments de ressort (4) présentent à leur partie dorsale (5) des pattes (8) latéralement saillantes, avec lesquelles les éléments de ressort sont insérés dans des encoches (10) prévues dans la périphérie de l'alésage du stator et présentant des contre-dépouilles (11, 13), encoches (10) qui s'étendent au moins jusqu'à un côté frontal du stator (1) et sont ouvertes sur ce côté.

2. Stator selon la revendication 1, caractérisé par le fait que les encoches (10) sont réalisées sous la forme de fentes en forme d'une queue d'aronde ou d'un T, alors que les pattes (8) sont découpées dans la partie dorsale et sont dépliées.

FIG 1

FIG 2

FIG 3

FIG 4